# EUROPÄISCHE PATENTANMELDUNG

(11) **EP 4 714 738 A1**
(43) Veröffentlichungstag der Anmeldung: **25.03.2026**
(21) Anmeldenummer: 25200107.8
(22) Anmeldetag: 04.09.2025
(51) Int. Cl.: B60N 2/58, B60N 2/70, B29C 43/18

(54) **VERFAHREN ZUR HERSTELLUNG EINES POLSTERELEMENTS AUS FASERVLIESELEMENTEN FÜR EINEN FAHRZEUGSITZ, FAHRZEUGSITZ MIT EINEM SOLCHEN POLSTERELEMENT UND KRAFTFAHRZEUG MIT EINEM SOLCHEN FAHRZEUGSITZ**

(30) Priorität: 20.09.2024 DE 102024127184
(71) Anmelder: AUDI Aktiengesellschaft, 85057 Ingolstadt (DE)
(72) Erfinder: Ellermann, Lars, 74189 Weinsberg (DE); Ross, Steffen, 85139 Wettstetten (DE)

(57) **Zusammenfassung**

Beschrieben wird ein Verfahren (500) zur Herstellung eines Polsterelements (10) eines Fahrzeugsitzes (20) umfassend die Schritte: Bereitstellen (S501) von wenigstens zwei plattenartigen Faservlieselementen (12a, 12b, 12c, 12d); Einlegen (S502) von einem oder mehreren Faservlieselement(en) (12a, 12b) in ein Umformwerkzeug; Einlegen (S503) von wenigstens einem Zusatzbauteil (14) aus einem Kunststoff oder/und einem Metall oder/und aus einem Textil auf das zuletzt eingelegte Faservlieselement (12b); Einlegen (S504) von wenigstens einem weiteren Faservlieselement (12c, 12d) in das Umformwerkzeug, wobei das wenigstens eine Faservlieselement (12c, 12d) das wenigstens eine Zusatzbauteil (14) abdeckt; Schließen des Umformwerkzeugs und Einspritzen von einem dampfförmigen Fluid, insbesondere Wasserdampf, so dass die Faservlieselemente (12a, 12bv, 12c, 12d) aufquellen und miteinander materialschlüssig verbunden werden zu einem Polsterelement (10) und das wenigstens eine Zusatzbauteil (14) materialschlüssig in dem Polsterelement (10) verbunden ist. Ferner werden ein Fahrzeugsitz mit wenigstens einem solchen Polsterelement (10) und ein Kraftfahrzeug mit einem solchen Fahrzeugsitz beschrieben.

## Beschreibung

Die Erfindung betrifft ein Verfahren zur Herstellung eines Polsterelements eines Fahrzeugsitzes, einen Fahrzeugsitz mit wenigstens einem solchen Polsterelement und ein Kraftfahrzeug mit wenigstens einem solchen Fahrzeugsitz.

Zur Befestigung eines Sitzbezugs an einem Polsterelement aus einem geschäumten Kunststoffmaterial, wie beispielweise Polyurethan (PU), werden Drähte in das Schaumwerkzeug gelegt und im Herstellungsprozess mit dem (PU-)Schaum eingeschäumt. Beim Anbringen eines Bezugselements wird dieses mit einer Klammer am eingeschäumten Draht befestigt. Aktuell gibt es aufgrund von Nachhaltigkeitsgründen Bestrebungen, Polsterelemente aus Fasermaterialien herzustellen, um geschäumte Kunststoffe vermeiden zu können. Dabei wird an einer Rückseite bzw. B-Seite des Polsterelements aus Fasermaterial ein Drahtrahmen separat angeracht, an dem dann ein Bezugselement befestigt werden kann.

Zum Stand der Technik wird beispielsweise auf die EP 2 417 876 A1 und die DE 10 2010 005 994 A1 hingewiesen. Als weitere Dokumente zum Hintergrund sind die US 11 554 699 B2, US 2022 098 770 A1, WO 2020 190 831 A1, EP 3 483 002 A1 und US 7 837 263 B2 zu nennen.

Die der Erfindung zu Grunde liegende Aufgabe wird darin gesehen, ein Verfahren zur Herstellung eines Polsterelements aus Fasermaterial anzugeben, bei dem eine separate Befestigung von einem zusätzlichen Drahtrahmen entfallen kann.

Diese Aufgabe wird gelöst durch ein Verfahren, einen Fahrzeugsitz und ein Kraftfahrzeug mit den Merkmalen des jeweiligen unabhängigen Patentanspruchs. Vorteilhafte Ausgestaltungen mit zweckmäßigen Weiterbildungen sind in den abhängigen Patentansprüchen angegeben.

Vorgeschlagen wird also ein Verfahren zur Herstellung eines Polsterelements eines Fahrzeugsitzes umfassend die Schritte:
Bereitstellen von wenigstens zwei plattenartigen Faservlieselementen; Einlegen von einem oder mehreren Faservlieselement(en) in ein Umformwerkzeug; Einlegen von wenigstens einem Zusatzbauteil aus einem Kunststoff oder/und einem Metall oder/und aus einem Textil auf das zuletzt eingelegte Faservlieselement; Einlegen von wenigstens einem weiteren Faservlieselement in das Umformwerkzeug, wobei das wenigstens eine Faservlieselement das wenigstens eine Zusatzbauteil abdeckt; Schließen des Umformwerkzeugs und Einspritzen von einem dampfförmigen Fluid, insbesondere Wasserdampf, so dass die Faservlieselemente aufquellen und miteinander materialschlüssig verbunden werden zu einem Polsterelement und das wenigstens eine Zusatzbauteil materialschlüssig in dem Polsterelement verbunden ist.

Dabei können die plattenartigen Faservlieselemente unterschiedliche (technische) Eigenschaften aufweisen, insbesondere unterschiedliche chemische Zusammensetzungen oder/und unterschiedliche Plattendicken oder/und unterschiedliche physikalische Eigenschaften, wie Elastizität oder dergleichen aufweisen.

Durch das Verfahren kann ein Zusatzbauteil direkt in das Polsterelement aus Faservlieselementen eingebracht und integriert werden. Dabei kann das Zusatzbauteil insbesondere als Rahmen aus einem metallischen Draht oder aus einem Kunststoff hergestellt sein. Alternativ oder ergänzend kann das Zusatzbauteil auch eine textile Schicht oder ein textiles, insbesondere rahmenartig ausgebildetes Element sein, das zwischen zwei Faservlieselementen angeordnet wird.

Bei dem Verfahren kann durch das Aufquellen der Faservlieselemente in dem geschlossenen Umformwerkzeug eine Vorform oder eine Endform des Polsterelements gebildet werden. Dabei erfolgt das Umformen des Polsterelements aufgrund des Zusammenspiels von chemischen und/oder physikalischen Reaktionen, wenn dass dampfförmige Fluid in dem geschlossenen Umformwerkzeug mit den Faservlieselementen in Wechselwirkung tritt.

Bei dem Verfahren kann das Polsterelement als Vorform in einem weiteren Schritt in dem Umformwerkzeug oder außerhalb des Umformwerkzeugs geschnitten oder/und gepresst werden, um eine Endform des Polsterelements herzustellen. Es ist beispielsweise möglich, dass zueinander bewegliche Werkzeughälften des Umformwerkzeugs beim Einspritzen des dampfförmigen Fluid weiter voneinander entfernt sind, so dass das Aufquellen der Faservlieselemente in einem ausreichenden Ausmaß erfolgen kann und dass die Werkzeughälften nach eine bestimmten Zeitdauer, insbesondere nach dem Aufquellen der Faservlieselemente näher zueinander hin bewegt werden, um eine Endform des Polsterelements herstellen zu können.

Bei dem Verfahren kann an dem Polsterelement, insbesondere nach dessen Entnahme aus dem Umformwerkzeug, ein Polsterbezugselement aus einem textilen Material oder/und aus einem Leder oder/und aus einem Kunststoff angebracht werden, wobei das Polsterbezugselement mittels mehrerer Polsterklammern an dem wenigstens einen Zusatzbauteil, das materialschlüssig in dem Polsterelement aufgenommen ist, befestigt wird. Dabei bildet das Zusatzbauteil eine Art Armierung oder Verankerung, mit der die mehreren Polsterklammern in Eingriff gebracht werden, so dass ein Ausreißen der Polsterklammern aus den miteinander verbundenen Faservlieselementen verhindert ist.

Bei dem können die verwendeten Polsterklammern aus einem Flachbandmaterial, insbesondere Flachbandstahl hergestellt sein.

Hinsichtlich solcher Polsterklammern wird insbesondere auf die von der gleichen Anmelderin gleichzeitig eingereichte Anmeldung mit dem Titel "Polsterklammer aus einem metallischen Flachband für die Befestigung von einem Polsterbezug an einem Polsterelement eines Fahrzeugsitzes, Fahrzeugsitz mit solchen Polsterklammern und Kraftfahrzeug mit einem solchen Fahrzeugsitz" hingewiesen.

Vorgeschlagen wird auch Fahrzeugsitz mit wenigstens einem Polsterelement, das entsprechend dem oben beschriebenen Verfahren hergestellt worden ist, wobei das Polsterelement ein Sitzpolster oder/und ein Rückenpolster oder/und ein Wangenpolster ist. Als Wangenpolster kann beispielsweise eine seitliche Beinführung im Bereich des Sitzpolsters oder eine seitliche Körperführung im Bereich des Rückenpolsters verstanden werden.

Ferner wird auch ein Kraftfahrzeug mit wenigstens einem solchen Fahrzeugsitz vorgeschlagen.

Weitere Vorteile und Einzelheiten der Erfindung ergeben sich aus der nachfolgenden Beschreibung von Ausführungsformen unter Bezugnahme auf die Figuren. Dabei zeigt:
- Fig. 1: anhand von vereinfachten Schnittansichten ein Verfahren zur Herstellung von einem Polsterelement eines Fahrzeugsitzes;
- Fig. 2: anhand einer weiteren Schnittansicht einen optionalen Schritt des Verfahrens;
- Fig. 3: eine vereinfachte Draufsicht auf ein Polsterelement mit Zusatzbauteil sowie schematisch einen Fahrzeugsitz und ein Kraftfahrzeug.

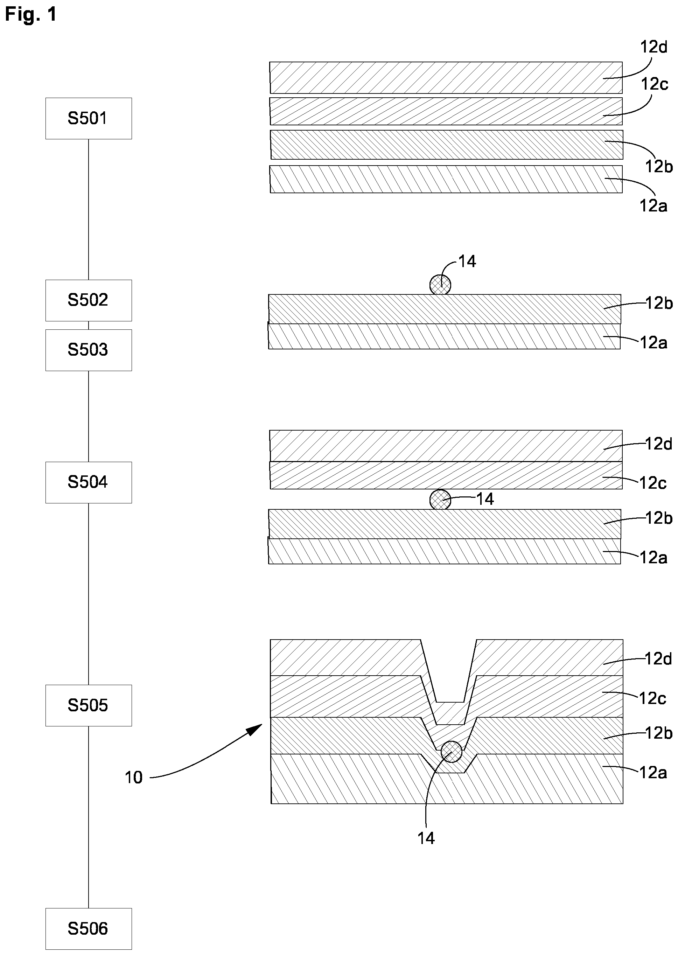

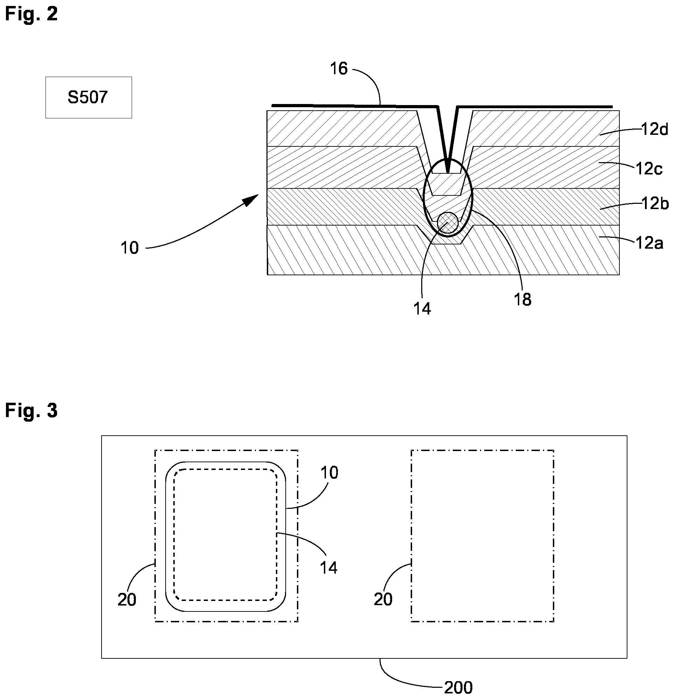

In Fig. 1 ist in einem vereinfachten und schematischen Diagramm ein Verfahren 500 zur Herstellung eines Polsterelements 10 (Fig. 2) gezeigt.

Gemäß einem Schritt S501 erfolgt ein Bereitstellen von wenigstens zwei plattenartigen Faservlieselementen 12a, 12b, 12c, 12d.

Gemäß einem Schritt S502 wird eines der Faservlieselemente oder werden mehrere der Faservlieselemente 12a, 12b in ein nicht gezeigtes Umformwerkzeug eingelegt.

Gemäß einem Schritt S503 erfolgt ein Einlegen von wenigstens einem Zusatzbauteil 14 aus einem Kunststoff oder/und einem Metall oder/und aus einem Textil auf das zuletzt eingelegte Faservlieselement 12b.

Gemäß einem Schritt S504 erfolgt ein Einlegen von wenigstens einem weiteren Faservlieselement 12c, 12d in das Umformwerkzeug, wobei das wenigstens eine Faservlieselement 12c, 12d das wenigstens eine Zusatzbauteil 14 abdeckt.

Gemäß einem Schritt S505 erfolgt ein Schließen des Umformwerkzeugs und Einspritzen von einem dampfförmigen Fluid, insbesondere Wasserdampf, so dass die Faservlieselemente 12a. 12b. 12c. 12d aufquellen und miteinander materialschlüssig verbunden werden zu einem Polsterelement 10 und das wenigstens eine Zusatzbauteil 14 materialschlüssig in dem Polsterelement 10 verbunden ist.

In der vereinfachten Darstellung des Schritts S505 ist auch eine Umformung der Faservlieselemente 12a, 12b, 12c, 12d oberhalb des Zusatzbauteils 14 illustriert. Es wird darauf hingewiesen, dass die bei den Schritte S501 bis S505 dargestellten Faservlieselemente 12a, 12b, 12c, 12d und das Zusatzbauteils 14 nur ausschnittsweise und schematisch dargestellt sind. Die zum Schritt S505 dargestellte Schnittansicht zeigt lediglich einen kleinen Ausschnitt eines Polsterelements 10.

Durch das Aufquellen (S505) der Faservlieselemente 12a, 12b, 12c, 12d in dem geschlossenen Umformwerkzeug eine Vorform oder eine Endform des Polsterelements10 gebildet.

Gemäß einem optionalen Schritt S506 wird das Polsterelement 10 als Vorform in dem Umformwerkzeug oder außerhalb des Umformwerkzeugs geschnitten oder/und gepresst, um eine Endform des Polsterelements 10 herzustellen.

Gemäß einem in Fig. 2 dargestellten optionalen Schritt S507 kann an dem Polsterelement 10 ein Polsterbezugselement 16 aus einem textilen Material oder/und aus einem Leder oder/und aus einem Kunststoff angebracht werden, wobei das Polsterbezugselement 16 mittels mehrerer Polsterklammern 18 an dem wenigstens einen Zusatzbauteil 14, das materialschlüssig in dem Polsterelement 10 aufgenommen ist, befestigt wird.

Dabei können die hier vereinfacht als Ellipsen dargestellten Polsterklammern 18 aus einem Flachbandmaterial, insbesondere Flachbandstahl hergestellt sein.

In der Fig. 3 ist vereinfacht und schematisch in einer Draufsicht ein Polsterelement 10 gezeigt mit einem darin materialschlüssig aufgenommenen Zusatzbauteil 14. Das Zusatzbauteil 14 ist als gestrichelte Linie dargestellt. Das Zusatzbauteil 14 kann beispielweise eine Art Rahmen sein, etwa aus einem Metalldraht oder aus einem Kunststoff. Dies ermöglicht das Befestigen eines Bezugselements 16 (Fig. 2) umlaufend entlang des Polsterelements 10 bzw. des darin aufgenommenen Zusatzbauteils 14.

Es wird darauf hingewiesen, dass das Zusatzbauteil 14 auch eine andere Form aufweisen kann, als die in der Fig. 3 vereinfacht dargestellte.

Aus der Fig. 3 ist ferner ersichtlich, dass ein gemäß dem oben beschriebenen Verfahren 500 hergestelltes Polsterelement 10 Teil eines Fahrzeugsitzes 20 sein kann, der hier als strichpunktiertes Rechteck illustriert ist. Ferner zeigt die Fig. 3 auch, dass ein Kraftfahrzeug 200 wenigstens einen solchen Fahrzeugsitz 20 aufweisen kann.

## Patentansprüche

1. Verfahren (500) zur Herstellung eines Polsterelements (10) eines Fahrzeugsitzes (20) umfassend die Schritte:
Bereitstellen (S501) von wenigstens zwei plattenartigen Faservlieselementen (12a, 12b, 12c, 12d);
Einlegen (S502) von einem oder mehreren Faservlieselement(en) (12a, 12b) in ein Umformwerkzeug;
Einlegen (S503) von wenigstens einem Zusatzbauteil (14) aus einem Kunststoff oder/und einem Metall oder/und aus einem Textil auf das zuletzt eingelegte Faservlieselement (12b);
Einlegen (S504) von wenigstens einem weiteren Faservlieselement (12c, 12d) in das Umformwerkzeug, wobei das wenigstens eine Faservlieselement (12c, 12d) das wenigstens eine Zusatzbauteil (14) abdeckt;
Schließen des Umformwerkzeugs und Einspritzen von einem dampfförmigen Fluid, insbesondere Wasserdampf, so dass die Faservlieselemente (12a, 12bv, 12c, 12d) aufquellen und miteinander materialschlüssig verbunden werden zu einem Polsterelement (10) und das wenigstens eine Zusatzbauteil (14) materialschlüssig in dem Polsterelement (10) verbunden ist.

2. Verfahren (500) nach Anspruch 1, wobei durch das Aufquellen der Faservlieselemente (12a, 12b, 12c, 12d) in dem geschlossenen Umformwerkzeug eine Vorform oder eine Endform des Polsterelements (10) gebildet wird.

3. Verfahren (500) nach Anspruch 2, wobei das Polsterelement (10) als Vorform in einem weiteren Schritt (S506) in dem Umformwerkzeug oder außerhalb des Umformwerkzeugs geschnitten oder/und gepresst wird, um eine Endform des Polsterelements (10) herzustellen.

4. Verfahren (500) nach Anspruch 2 oder 3, wobei an dem Polsterelement (10) ein Polsterbezugselement (16) aus einem textilen Material oder/und aus einem Leder oder/und aus einem Kunststoff angebracht wird (S507), wobei das Polsterbezugselement (16) mittels mehrerer Polsterklammern (18) an dem wenigstens einen Zusatzbauteil (14), das materialschlüssig in dem Polsterelement (10) aufgenommen ist, befestigt wird.

5. Verfahren (500) nach Anspruch 4, wobei die Polsterklammer (18) aus einem Flachbandmaterial, insbesondere Flachbandstahl, hergestellt ist.

6. Fahrzeugsitz (20) mit wenigstens einem Polsterelement (10), das entsprechend dem Verfahren (500) gemäß einem der vorhergehenden Ansprüche hergestellt worden ist, wobei das Polsterelement (10) ein Sitzpolster oder/und ein Rückenpolster oder/und ein Wangenpolster ist.

7. Kraftfahrzeug (200) mit wenigstens einem Fahrzeugsitz (20) gemäß Anspruch 6.
